(19)

Europäisches
Patentamt
European
Patent Office
Office européen
des brevets

(11) **EP 2 276 210 A2**

(12) **EUROPEAN PATENT APPLICATION**

(43) Date of publication:
**19.01.2011 Bulletin 2011/03**

(51) Int Cl.:
***H04L 25/03*** (2006.01)

(21) Application number: **10166142.9**

(22) Date of filing: **16.06.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **14.07.2009 US 460144**

(71) Applicant: **Nokia Corporation**
**02150 Espoo (FI)**

(72) Inventors:
• **Semenov, Sergei**
  **24280 Salo (FI)**
• **Malkov, Andrei**
  **25130 Muurla (FI)**
• **Östman, Kjell**
  **24800 Halikko (FI)**

(74) Representative: **Tognetty, Virpi Maria et al**
**Nokia Corporation**
**IPR Department**
**Keilalahdentie 4**
**02150 Espoo (FI)**

(54) **Channel estimates in a SIC receiver for a multi-transmitter array transmission scheme**

(57) In a receiver first stage, received signals are equalized using first stage channel estimates, a first data stream is separated from a second data stream; and interference on the first data stream is re-generated by filtering the decoded first data stream (after decoding) using the first stage channel estimates. Second stage channel estimates are calculated using the first stage channel estimates and gain derived from generating the interference, and the interference is subtracted from the received signals. In the receiver second stage, the signals from which the interference was subtracted are equalized using the second stage channel estimates, the second stream of data is decoded; and the decoded first data stream and the decoded second data stream are output. One embodiment gets channel estimates for each stage from the received signal and regenerates pilot interference; the other calculates updated channel estimates from the first stage for use in the second stage.

FIG.4

**Description**

TECHNICAL FIELD:

The exemplary and non-limiting embodiments of this invention relate generally to wireless communication systems, methods, devices and computer programs and, more specifically, relate to successive interference cancellation (SIC) techniques for processing received signals.

BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

The following abbreviations that may be found in the specification and/or the drawing figures are defined as follows:

| | |
|---|---|
| 3GPP | third generation partnership project |
| CPICH | common pilot channel |
| D-TxAA | double transmitter antenna array |
| HSDPA | high-speed downlink packet access |
| HS-DSCH | high-speed downlink shared channel |
| LTE | long term evolution |
| MIMO | multiple input multiple output |
| OFDM | orthogonal frequency division multiplexing |
| SINR | signal to interference and noise ratio |
| UE | user equipment |
| UTRAN | universal terrestrial radio access network |
| WCDMA | wideband code division multiple access |
| WiMAX | worldwide interoperability for microwave access |

One wireless signal reception technique is successive interference cancellation SIC, which is typically employed in MIMO systems in which there are multiple transmit TX and multiple receive RX antennas. These are the endpoints of the channel, and the SIC receiver needs to obtain estimates of that channel in order to adequately recover the transmitted symbol from the signal which it receives. The SIC receiver processes the received signal in stages. In each stage, the SIC receiver uses spatial or space-time processing to 'detect' a symbol stream, and the SIC receiver selects one of those detected symbol streams for recovery. This recovered symbol stream has a particular SINR, which in the SIC technique depends on the SINR for that stage and from earlier processing stages. Ideally then, the SINR progressively improves through the processing stages because the interference from symbol streams recovered in previous stages is canceled as processing progresses.

These teachings are particularly relevant to the channel estimates at the second stage of a SIC receiver. The channel estimates are used in the SIC receiver's equalizer for tuning the equalizer filters, which aid in removing distortion which is added to the signal as it transits through the wireless channel between transmitter and receiver. The channel estimates are calculated with the help of common pilot signals which are associated with the transmitter antennas.

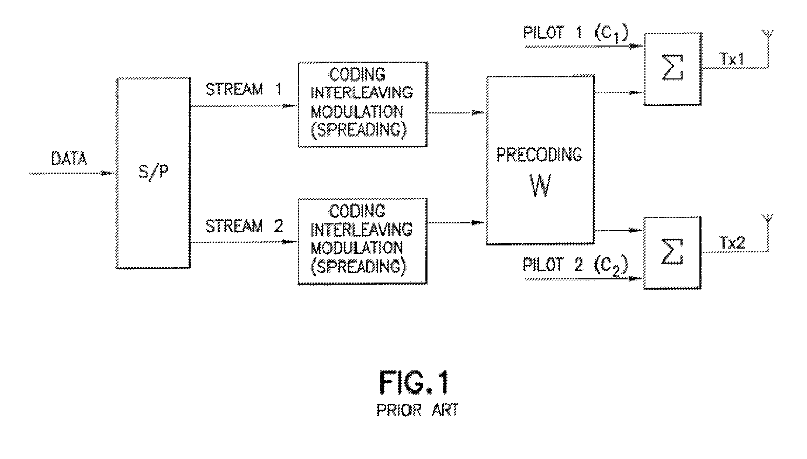

There is a particular transmission scheme to which the SIC reception teachings presented herein are relevant, termed in the art as a double transmitter antenna array D-TxAA MIMO scheme. This MIMO transmission scheme has been adopted by 3GPP as standard for HSDPA MIMO and also for certain cases of OFDM MIMO. In the D-TxAA MIMO scheme, the data at the transmitter is split into two streams which are precoded in such a way as to be orthogonal to each other, and then each stream is transmitted via two transmitter antennas. This is shown generally at Figure 1: a serial data stream 101 is split at a serial-to-parallel splitter 102 into two streams, which are then coded, interleaved and modulated at block 104 in parallel. If there is spreading of the transmitted signal that also occurs at block 104. The modulated streams are then precoded at the precoding block 106, which mixes the two streams that are input thereto so that each parallel output actually carries data from both of the parallel input streams, with different gains/antenna weights for the different transmit antennas to account for different channel conditions experienced by transmissions from the respective antennas. Different pilot symbols C1 and C2 are then added to the different parallel outputs of the precoding block 106 and added with the respective output data before being transmitted from the respective first TX1 and second TX2 transmit antennas. Each stream of the underlying data 101 is transmitted by both transmit antennas, the difference in the transmissions lies in the different antenna weights applied to the streams and the different pilot symbols transmitted by the different TX antennas.

On the receive side, the SIC receiver equalizes, demodulates and decodes the received data in two stages. At the first stage, one of the streams is equalized, demodulated and decoded. Then the reconstructed signal of this stream is subtracted from the received signal to increase the signal to interference ratio (SINR) at the input of the second stage. Then the signal obtained after subtraction of the signal corresponding to the stream processed at the first stage from the received signal is used as input for the second stage. And at the second stage the other stream is equalized, demodulated and decoded. The original channel estimates which were calculated with the help of common pilot signals are used in the equalizer at the first stage of the SIC receiver. It is possible to use the same channel estimates at the second stage also, but in this case they do not reflect the increase of SINR at the second stage.

In the US Patent 6,917,821 B2 "Successive Interference Cancellation Receiver Processing with Selection Diversity" by T. Kadous and A.D. Subramaniam, the principle of SIC receiver for PARC system is described. In this case each stream is transmitted via a separate transmitter antenna and so the common pilot signals used for the calculation of channel estimates are associated with the transmitter antennas rather than with the streams. For this reason the SIC processing detailed at US Patent 6,917,821 cannot be used for D-TxAA system.

In paper by Shakti Prasad Shenoy, Irfan Ghauri, Dirk T.M. Slock entitled: "Optimal Precoding and MMSE Receiver Designs for MIMO WCDMA" (VEHICULAR TECHNOLOGY CONFERENCE, 2008. VTC SPRING 2008. IEEE; 11-14 May 2008; pages 893-897), the equalizer for the second step of SIC processing is calculated

as $f_{sic} = \sigma_b^2 \cdot \left( \frac{1}{\sqrt{2}} \widetilde{h}_1^H - w \widetilde{h}_2^H \right) \cdot R_{yy}^{-1}$, where $\overline{y}[n] = T(\overline{H}) S[n] C A_2[n] + V[n]$ and $T(\overline{H}) = \frac{1}{\sqrt{2}} T(H_1) - w T(H_2)$,

$\overline{R}_{yy}$ is the error covariance matrix, and $T(\overline{H})$ is a block Toeplitz matrix with matrix $[\overline{H}0]$ as the first block row. Using the same notations as used in the description below means that the channel estimates for the second stage of SIC processing are calculated as $\widetilde{\mathbf{h}}_1 = 0$ and $\widetilde{\mathbf{h}}_2 = w_3 \mathbf{h}_1 + w_4 \mathbf{h}_2$.

What is needed in the art is a technique to modify the original channel estimates in such a way that the modified channel estimates reflect all the changes made in the data signal after cancelling the interference from other stream signal.

SUMMARY:

The foregoing and other problems are overcome, and other advantages are realized, by the use of the exemplary embodiments of this invention.

In a first aspect thereof the exemplary embodiments of this invention provide a method which comprises: in a first stage of a receiver, equalizing signals received on at least two receive antenna ports using first stage channel estimates and separating a first stream of data from a second stream of data; and generating interference on the first stream of data by decoding the first stream of data and filtering the decoded first stream of data using the first stage channel estimates. Further in the method are calculated second stage channel estimates using the first stage channel estimates and gain derived from generating the interference; and the interference is subtracted from the signals received on the at least two receive antenna ports. In a second stage of the receiver, the signals from which the interference was subtracted are equalized using the second stage channel estimates and decoding the second stream of data; and the decoded first stream of data and the decoded second stream of data are output.

In a second aspect thereof the exemplary embodiments of this invention provide an apparatus comprising at least two receive antenna ports, a first stage channel estimator, a first stage equalizer, a first stage post-processing block, a data interference regeneration block, a second stage channel estimator, summing junctions, and output ports. The first stage channel estimator has inputs coupled to at least two receive antenna ports. The first stage equalizer has inputs coupled to outputs of the first stage channel estimator and to the at least two receive antenna ports, and it is configured to equalize signals input from the at least two receive antenna ports using first stage channel estimates provided by the first stage channel estimator. The first stage post-processing block has inputs coupled to outputs of the first stage equalizer, and it is configured to separate a first stream of data from a second stream of data. The data interference regeneration block is configured to generate interference on the first stream of data by filtering the first stream of data, after that stream is decoded, using the first stage channel estimates. The second stage channel estimator is configured to calculate second stage channel estimates using the first stage channel estimates and a gain, in which the gain is derived from the generated interference. The summing junctions are configured to subtract the interference from the signals that are output from the at least two receive antenna ports. The second stage equalizer is configured to equalize the signals output from the summing junctions using the second stage channel estimates and to decode the second stream of data. And the output ports are configured to output the first stream of data after it is decoded and to output the second stream of data after that stream is decoded.

In a third aspect thereof the exemplary embodiments of this invention provide a memory (such as a computer readable RAM, ROM or other such memory) that stores a program of machine readable instructions. The instructions are such that when executed by a processor the resulting actions comprise: equalizing signals received on at least two receive antenna ports using first stage channel estimates and separating a first stream of data from a second stream of data; generating interference on the first stream of data by decoding the first stream of data and filtering the decoded first stream of data using the first stage channel estimates; calculating second stage channel estimates using the first stage channel estimates and gain derived from generating the interference; subtracting the interference from the signals received on the at least two receive antenna ports; equalizing the signals from which the interference was subtracted using the second stage channel estimates and decoding the second stream of data; and outputting the decoded first stream of data and the decoded second stream of data.

In a fourth aspect thereof the exemplary embodiments of this invention provide an apparatus comprising: at least two receive antenna ports; first channel estimating means for providing first stage channel estimates; first equalizing means for equalizing signals using the first stage channel estimates; first post-processing means for separating an output of the first equalizing means into a first stream of data from a second stream of data; data interference regeneration means for generating interference on the first stream of data by filtering the first stream of data, after decoding, using the first stage channel estimates; second channel estimating means for calculating second stage channel estimates using the first stage channel estimates and for deriving a gain from the generated interference; summing means for subtracting the interference from signals output from the at least two receive antenna ports; second equalizing means for equalizing the signals output from the summing means using the second stage channel estimates and for decoding the second stream of data; and output means for outputting the first stream of data after decoding and for outputting the second stream of data after decoding.

BRIEF DESCRIPTION OF THE DRAWINGS:

Figure 1 is a block diagram of a 2x2 double transmitter antenna array D-TxAA transmitter with a generic precoding block.

Figure 2 is a block diagram of how the receiver operating according to an embodiment of the invention considers that the D-TxAA transmitter of Figure 1 precodes fake CPICH symbols.

Figure 3 is a diagram illustrating channel estimates at instance $i$ where a transmitter with 2 Tx antennas and a receiver with two Rx antennas define endpoints of the channel.

Figure 4 is a block diagram illustrating data flow in an SIC receiver in accordance with a first embodiment of the invention, and having alternate processing blocks for different implementations.

Figure 5 is a block diagram illustrating data flow in an SIC receiver in accordance with a second embodiment of the invention, and having alternate processing blocks for different implementations.

Figure 6A shows a simplified block diagram of various electronic devices that are suitable for use in practicing the exemplary embodiments of this invention.

Figure 6B shows a more particularized block diagram of a user equipment such as that shown at Figure 6A.

Figure 7 is a logic flow diagram that illustrates the operation of a method, and a result of execution of computer program instructions embodied on a computer readable memory, in accordance with the exemplary embodiments of this invention.

DETAILED DESCRIPTION:

Below are detailed two distinct embodiments of an SIC receiver for use in a system in which there is a D-TxAA transmitter, that is, one in which each of the two data streams are not associates with only one of the two transmit antennas but in which both distinct data streams are transmitted by each transmit antenna.

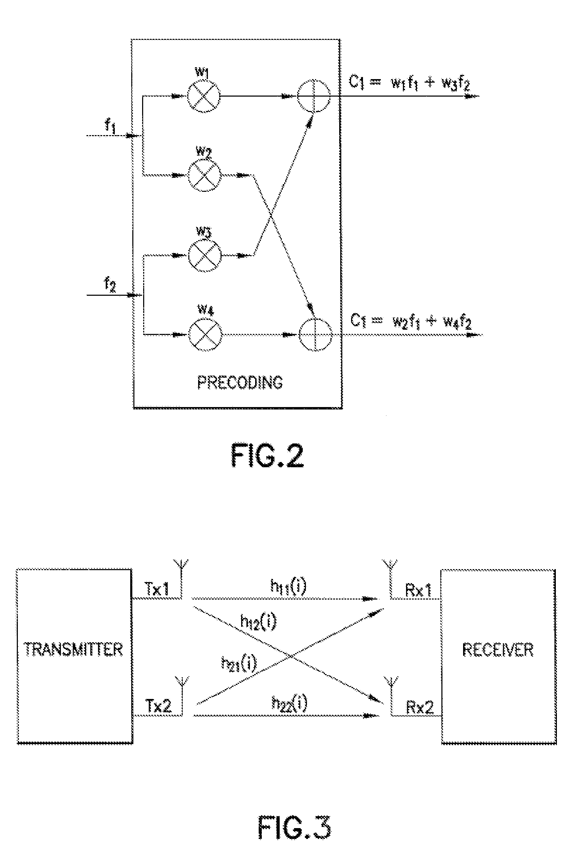

According to a first embodiment of the invention, the common pilot signals are regarded at the SIC receiver as if they were precoded in the same way as data at the transmitter. This is shown by example at Figure 2, which the SIC receiver assumes is the precoding block 106 of Figure 1 at the transmitter for how fake pilot symbols $f_1$ and $f_2$ are formed there. It is assumed that the pilot symbols $C_1$ and $C_2$ corresponding to the transmitter antennas Tx1 and Tx2 are obtained from the fake pilot symbols $f_1$ and $f_2$ corresponding to stream1 and stream2 with the help of multiplication by the precoding

matrix $\mathbf{W}$, $\begin{bmatrix} C_1 \\ C_2 \end{bmatrix} = \mathbf{W} \cdot \begin{bmatrix} f_1 \\ f_2 \end{bmatrix}$, where $\mathbf{W} = \begin{bmatrix} w_1 & w_3 \\ w_2 & w_4 \end{bmatrix}$. These fake pilot symbols are used for processing in the SIC receiver according to this first embodiment, but they are not actual symbols that are received at the SIC receiver. As shown in Figure 2, using the processing which the SIC receiver assumes takes place in the D-TxAA transmitter precoding block enables the receiver to reconstruct exactly what are the actual pilot symbols $C_1$ and $C_2$ that are transmitted by the different transmit antennas. The values $w_1$ through $w_4$ are antenna weights the transmitter imposes based on the reported or estimated channel conditions.

Figure 3 is a straightforward model of the channel through which the MIMO signal travels between the transmitter's two TX antennas and the receiver's two RX antennas at time instant $i$. Each path is estimated by a vector $\mathbf{h}$ for which the first subscript indicates the transmit antenna and the second subscript indicates the receive antenna. In general, these are truncated below as $\mathbf{h}_1$ and $\mathbf{h}_2$ to represent the channel seen by the respective first and second TX antennas, since the processing detailed below is from the perspective of the receiver. So for example in the arrangement of Figure 3 $\mathbf{h}_1$ represents the channel between one transmit antenna Tx 1 and the two receive antennas Rx 1 and Rx2, while $\mathbf{h}_2$ represents the channel between the other transmit antenna Tx2 and the two receive antennas Rx1 and Rx2. The full MIMO channel is represented as capital $\mathbf{H}$ as is standard notation.

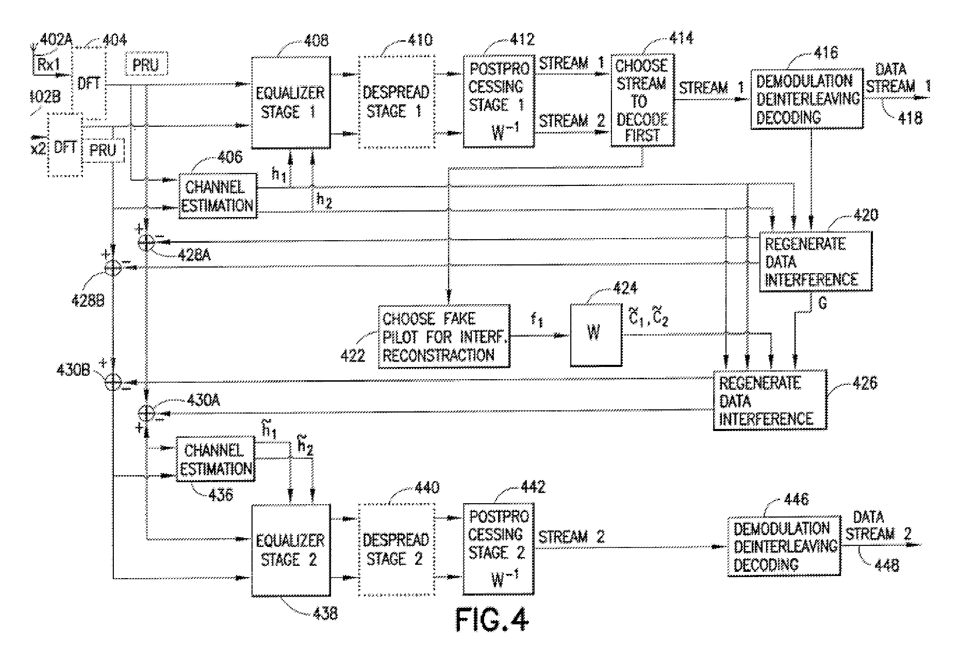

Continuing with the first embodiment which uses the fake pilot symbols, at the receiver the channel estimates $\hat{h}_1$ and $\hat{h}_2$ which are used for tuning the equalizer filters at stage 1 are calculated with the help of the received (estimated) pilot symbols $\hat{C}_1$ and $\hat{C}_2$. For simplicity of this description, assume that stream1 is chosen to be processed first at stage 1, and after processing the interference originated from stream1 is cancelled from the input signal. To obtain the channel estimates for stage 2 reflecting the data interference cancellation, the pilot symbols originated from the fake symbol corresponding to stream1 are restored in the same way as the stream1 data. This is done in the following steps which are detailed with respect to a SIC receiver shown at Figure 4 for the first embodiment.

Figure 4 illustrates for two distinct implementations: the DFT blocks 404 are present in an OFDM implementation but absent from a WCDMA implementation, while the despreader blocks 410, 440 and the re-spreading described as taking place at the regeneration/reconstruction block 420 are relevant to the WCDMA implementation but may not be present in an OFDM implementation. Other implementations of the SIC receiver may include all the functional blocks shown at Figure 4 but with those noted above being switched in and out of active use depending on whether the signal being processed at any given instant is OFDM or WCDMA.

At Figure 4 the MIMO signal is received at a first RX antenna 402A and at a second RX antenna 402B. The input signal from the receiver antennas Rx1 and Rx2 is used for calculation of channel estimates $\mathbf{h}_1$ and $\mathbf{h}_2$ , which are formed by the channel estimator 406 after the discrete Fourier transform block(s) 404 (if the OFDM system is used) operate on the parallel received signals used the stage 1 equalizer 408. Then the first stage equalized signal is output to the first stage despreader 410 (if the WCDMA system is used) to extract the data from the signal. The obtained data is post-processed at block 412, which in this embodiment means the data is multiplied by matrix $\mathbf{W}^{-1}$ to split stream1 and stream2 data from one another. Recall that both stream 1 and stream 2 data are received on each RX antenna 402A, 402B. Only at the output of this post-processing block 412 are the streams separated within the receiver, and so at this point a decision is made at decision block 414 as to which stream to process further. Assume that in this instance we choose stream 1 so at block 416 the stream 1 data is demodulated, deinterleaved and decoded. The resulting stream1 data is sent to output 418.

Also the resulting data is fed to the data interference reconstruction block 420, where it is re-encoded, interleaved, modulated, spread (if the WCDMA system is used) and precoded, i.e. multiplied by matrix $\mathbf{W}$ just as was done in the transmitter on the original data. Then to simulate the channel impact, the obtained signal is filtered with channel estimates $\mathbf{h}_1$ and $\mathbf{h}_2$. Also the result of this channel filtering is scaled with gain G at the data interference reconstruction block 420. The calculated data interference is fed to the input of stage 2.

Recall that at decision block 414, stream 1 was chosen for further processing. For that selected stream, now at fake pilot selection block 422 the pre-calculated fake symbol $f_1$, corresponding to the chosen stream 1, is chosen for the pilot interference reconstruction. The chosen fake pilot symbol $f_1$ corresponding to stream1 is multiplied at matrix block 424 by matrix $\mathbf{W}$ to obtain the pilot symbols $\widetilde{C}_1$, $\widetilde{C}_2$ originated from the fake symbol $f_1$, according to

$$\begin{bmatrix} \widetilde{C}_1 \\ \widetilde{C}_2 \end{bmatrix} = \mathbf{W} \cdot \begin{bmatrix} f_1 \\ \mathbf{0} \end{bmatrix}.$$

The obtained pilot symbols $\widetilde{C}_1$, $\widetilde{C}_2$, are then fed to the pilot interference reconstruction block 426, which also filters the pilot symbols $\widetilde{C}_1$, $\widetilde{C}_2$ by channel estimates $\mathbf{h}_1$, $\mathbf{h}_2$ (obtained from the first stage channel estimator 406) and scaled by the gain G obtained from the data interference reconstruction block 420. The resulting pilot interference from block 426 is subtracted from the input signal from the first RX antenna 402A (after DFT if the OFDM system is used) at summing junction 430A and from the second RX antenna 402B (after DFT if the OFDM system is used) at summing junction 430B and the data interference resulting from block 420 is subtracted from the input signal (after DFT if the OFDM is used) at summing junctions 428A and 428B. This is where the stage 1 interference is subtracted from the signal, and so now the signal is prepared for input to the second stage.

From the interference subtracted signal new channel estimates are extracted at the second stage channel estimator 436. These new channel estimates are termed the modified channel estimates $\tilde{\mathbf{h}}_1$ and $\tilde{\mathbf{h}}_2$. Both the interference subtracted signal and the modified channel estimates are then input to the stage 2 equalizer 438. The equalized signal at stage 2 is despread (if the WCDMA system is used) at the stage 2 despreader 440 and the obtained data is post-processed at the stage 2 post-processing block 442 where it is multiplied by matrix $\mathbf{W}^{-1}$ to extract the stream2 data. After this the stream2 data is demodulated, deinterleaved and decoded at block 446, and the resulting stream2 data is sent to output 448.

Some important points to consider for this first embodiment:

● the fake pilot symbols are precalculated and known at the receiver $\begin{bmatrix} f_1 \\ f_2 \end{bmatrix} = \mathbf{W}^{-1} \cdot \begin{bmatrix} C_1 \\ C_2 \end{bmatrix}$. Then the pilot symbols originated from symbol $f_1$ are calculated as follows $\begin{bmatrix} \tilde{C}_1 \\ \tilde{C}_2 \end{bmatrix} = \mathbf{W} \cdot \begin{bmatrix} f_1 \\ 0 \end{bmatrix}$;

● the pilot symbols $\tilde{C}_1$, $\tilde{C}_2$ originated from symbol $f_1$ are filtered with the channel estimates $\mathbf{h}_1$ and $\mathbf{h}_2$ obtained at stage 1 to reflect the channel impact, then after scaling with the same gain G as was used in data interference cancellation they are subtracted from the input signal.

Note that because the channel impact in the process of the pilot interference cancellation (block 426) is simulated exactly in the same way as it was used in the process of the data interference cancellation (block 420) and the subtracted data and pilot signals are weighted with the same gain G, the pilots after interference cancellation at junctions 430A and 430B exactly reflect the data interference cancellation. Moreover, the pilot interference cancellation also decreases the interference from stream1 pilots to the data at stage2.

Note also that after the pilot interference cancellation at blocks 428A and 428B, the modified channel estimates $\tilde{\mathbf{h}}_1$ and $\tilde{\mathbf{h}}_2$ are calculated from the modified input signal. These channel estimates exactly reflects the increased data SINR after the data interference cancellation. The modified channel estimates $\tilde{\mathbf{h}}_1$ and $\tilde{\mathbf{h}}_2$ are then used in the stage 2 equalizer 438.

This first embodiment gives a more accurate calculation of channel estimates in comparison with those provided by prior art SIC techniques. However, there is a bit of complexity in the first embodiment since the additional channel estimation block 436 is needed. The second embodiment presented immediately below has a somewhat lower complexity of implementation, and so may be used in the alternative for those particular cases (and others) where the complexity is the limiting factor.

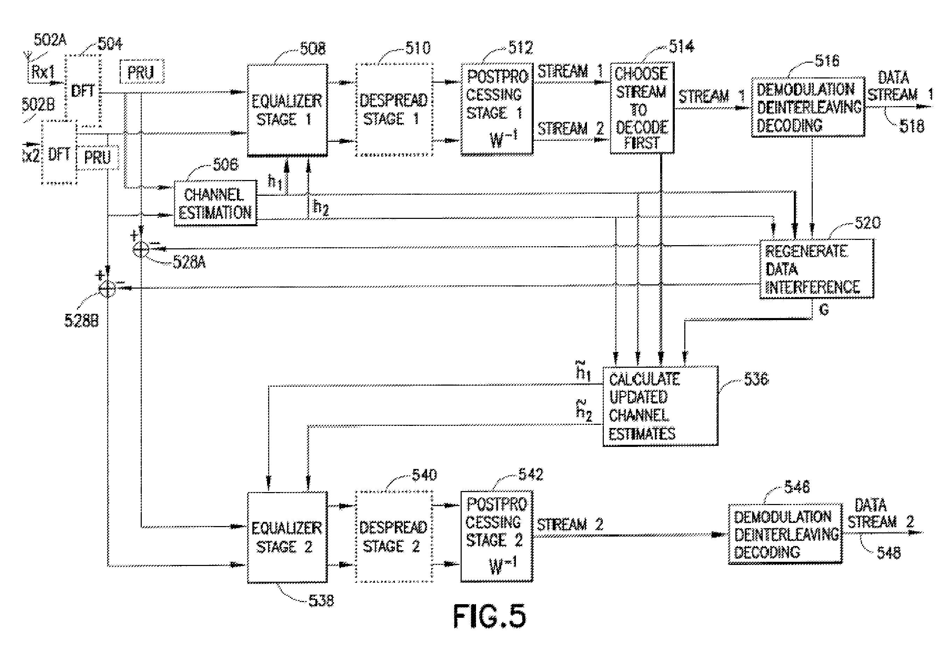

The second embodiment of the invention is detailed with respect to the example but non-limiting SIC receiver at Figure 5. As with the first embodiment, the precoding matrix $\mathbf{W}$ in this second embodiment is also represented as

$$\mathbf{W} = \begin{bmatrix} w_1 & w_3 \\ w_2 & w_4 \end{bmatrix}.$$

Similar to Figure 4, Figure 5 illustrates a hybrid receiver for two distinct implementations: the DFT blocks 504 are present in an OFDM implementation but absent from a WCDMA implementation, while the despreader blocks 510, 540 and the re-spreading described as taking place at the regeneration/reconstruction block 520 are relevant to the WCDMA implementation but may not be present in an OFDM implementation. Other implementations of the SIC receiver may include all the functional blocks shown at Figure 5 but with those noted above being switched in and out of active use depending on whether the signal being processed at any given instant is OFDM or WCDMA

Similar to the first embodiment, in this second embodiment the signal is received at both the first RX antenna 502A and the second RX antenna 502B, and a Fourier transform is executed at DFT block 504 (if the OFDM system is used). Channel estimates $\mathbf{h}_1$ and $\mathbf{h}_2$ are extracted at the first stage channel estimator 506, and those first stage channel estimates $\mathbf{h}_1$ and $\mathbf{h}_2$ are used for tuning the first stage equalizer 508. The channel estimates $\mathbf{h}_1$ and $\mathbf{h}_2$ are calculated with the help of the received pilot symbols $\hat{C}_1$ and $\hat{C}_2$. Specifically, it may be stated that generally:

$$\mathbf{h}_1 = \big(\mathbf{h}_1(0), \mathbf{h}_1(1), ..., \mathbf{h}_1(L-1)\big),$$

$$\mathbf{h}_1(i) = \begin{bmatrix} h_{11}(i) \\ h_{12}(i) \end{bmatrix},$$

$$\mathbf{h}_2 = \big(\mathbf{h}_2(0), \mathbf{h}_2(1), ..., \mathbf{h}_2(L-1)\big),$$

and

$$\mathbf{h}_2(i) = \begin{bmatrix} h_{21}(i) \\ h_{22}(i) \end{bmatrix},$$

where L is the channel length, $h_{mn}(i)$ is the estimate of channel path from transmitter antenna Txm to receiver antenna Rx$n$ at time instance $i$ as is shown at Figure 3. These first stage channel estimates can be represented in matrix form:

$$\mathbf{H}(i) = \begin{bmatrix} \mathbf{h}_1(i) & \mathbf{h}_2(i) \end{bmatrix} = \begin{bmatrix} h_{11}(i) & h_{21}(i) \\ h_{12}(i) & h_{22}(i) \end{bmatrix}, \ i = 0, ..., L-1.$$

The first stage equalized signal is output to the first stage despreader 510 (if the WCDMA system is used) to extract the data from the signal. The obtained data is post-processed at block 512, which in this embodiment multiplies the data by the inverse of the precoding matrix, $\mathbf{W}^{-1}$, to split the stream 1 and stream2 data from one another. As with the Figure 4 embodiment, the transmitter in the system of Figure 5 is also as D-TxAA MIMO transmitter so both stream1 and stream2 data are received on each RX antenna 502A, 502B. After post-processing block 512 the streams are separated within the receiver and so a decision is made at decision block 514 as to which stream to process further. Assume that in this instance, like the description for Figure 4 and the first embodiment, we also choose stream 1 so at block 516 the stream1 data is demodulated, deinterleaved and decoded. The resulting stream1 data is sent to output 518.
Also the resulting data is fed from block 516 to the data interference reconstruction block 520, where it is re-encoded, interleaved, modulated, spread (if the WCDMA system is used) and precoded, i.e. multiplied by the precoding matrix $\mathbf{W}$ just as was done in the transmitter on the original data and in the Figure 4 embodiment. Then to simulate the channel impact, the obtained signal is filtered with channel estimates $\mathbf{h}_1$ and $\mathbf{h}_2$. Also the result of this channel filtering is scaled with gain G at the data interference reconstruction block 520. The calculated data interference is canceled from the input signal at summing junctions 528A and 528B, similar to that described above for Figure 4 for input to the second stage. At this juncture the two embodiments diverge.
In this second embodiment, the modified channel estimates for stage 2 reflecting the data interference cancellation the pilot symbols originated from the fake symbol corresponding to stream1 are calculated as follows.
First, the combined precoding channel estimates matrices are calculated at the second stage channel estimator 536:

$$\hat{\mathbf{H}}(i) = \mathbf{H}(i)\mathbf{W} = \begin{bmatrix} h_{11}(i)w_1 + h_{21}(i)w_2 & h_{11}(i)w_3 + h_{21}(i)w_4 \\ h_{12}(i)w_1 + h_{22}(i)w_2 & h_{12}(i)w_3 + h_{22}(i)w_4 \end{bmatrix} = \begin{bmatrix} \hat{\mathbf{h}}_1(i) & \hat{\mathbf{h}}_2(i) \end{bmatrix},$$

$i = 0,..., L$-1. In this case $\hat{\mathbf{h}}_1(i)$ corresponds to the channel estimates of stream1 and $\hat{\mathbf{h}}_2(i)$ corresponds to the channel estimates of stream2.
As above we decide for this second embodiment at block 514 that we would select stream1 for further processing in stage 1 and for cancellation via summing junctions 528A and 528B from the input signal at the input of stage 2 with gain G. The gain G is calculated at the interference reconstruction block 520. The matrices $\hat{\mathbf{H}}(i)$ are modified at the second stage channel estimator 536 as follows: $\mathbf{H}'(i)=\lfloor \hat{\mathbf{h}}_1(i) \cdot (1-G) \hat{\mathbf{h}}_2(i) \rfloor$.

The modified channel estimates are calculated by multiplication of matrices $\mathbf{H}'(i)$ by matrix $\tilde{\mathbf{H}}(i)=[\tilde{\mathbf{h}}_1(i) \; \tilde{\mathbf{h}}_2(i)]= \mathbf{H}'(i) \cdot \mathbf{W}^{-1}$.

The modified channel estimates $\hat{\mathbf{h}}_1$ and $\hat{\mathbf{h}}_2$ are output from the second stage channel estimator 536 to be used in the second stage equalizer 538. The remainder of the stage 2 processing is similar to the first embodiment: the equalized signal at stage 2 is despread at the stage 2 despreader 540 (if the WCDMA system is used) and the obtained data is post-processed at the stage 2 post-processing block 542 where it is multiplied by matrix $\mathbf{W}^{-1}$ to extract the stream 2 data. After this the stream2 data is demodulated, deinterleaved and decoded at block 546, and the resulting stream2 data is sent to output 548.

This second embodiment provides a more accurate calculation of the channel estimates for the stage 2 of SIC processing in comparison with that of the prior art.

One technical aspect of the above embodiments of the invention is that they allow modification of the channel estimates at the second stage of the SIC receiver in such a way that modified channel estimates exactly reflect the change of the data SINR at the input of the second stage of SIC receiver. The first embodiments above provides an increased receiver complexity due to the additional channel estimation block used at the second stage of the SIC receiver. The first embodiment has the additional technical aspect that it also decreases the interference from the pilot channel to the data at Stage 2. The complexity of the second embodiment is lower than that of the first, but the channel estimates provided by the second embodiment are not consistently quite as accurate as that for the first embodiment.

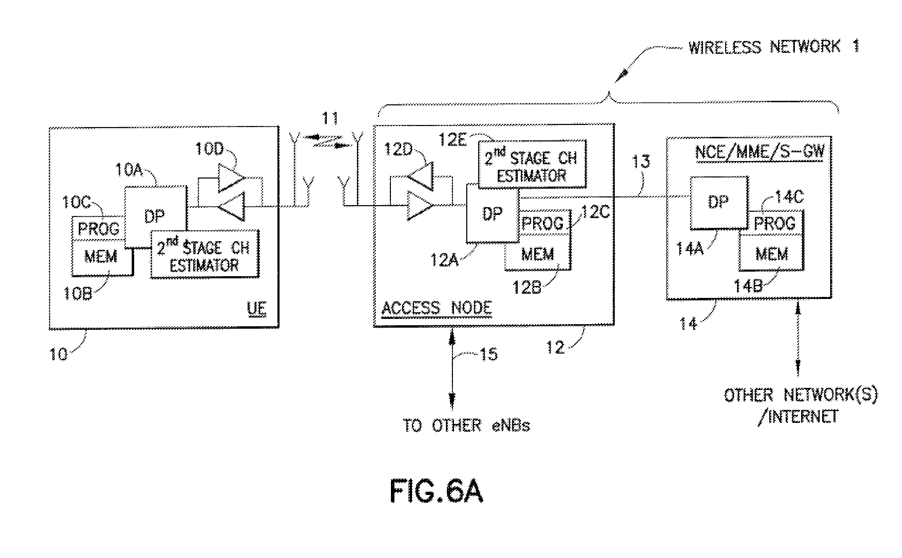

Reference is now made to Figure 6A for illustrating a simplified block diagram of various electronic devices and apparatus that are suitable for use in practicing the exemplary embodiments of this invention. In Figure 6A a wireless network 1 is adapted for communication over a wireless link 11 with an apparatus, such as a mobile communication device which may be referred to as a UE 10, via a network access node, such as an access node 12 (e.g., a Node B or base station). The network 1 may include a network control element (NCE) 14 that may include the functionality of a mobility management entity/serving gateway, and which provides connectivity with a network 1, such as a telephone network and/or a data communications network (e.g., the internet). The UE 10 includes a controller, such as a computer or a data processor (DP) 10A, a computer-readable memory medium embodied as a memory (MEM) 10B that stores a program of computer instructions (PROG) 10C, and a suitable radio frequency (RF) transceiver 10D for bidirectional wireless communications with the access node 12 via two or more antennas. The access node 12 also includes a controller, such as a computer or a data processor (DP) 12A, a computer-readable memory medium embodied as a memory (MEM) 12B that stores a program of computer instructions (PROG) 12C, and a suitable RF transceiver 12D for communication with the UE 10 via an array of two or more antennas. The access node 12 is coupled via a data/control path 13 to the NCE 14. The access node 12 may also be coupled to another access node via data/control path 15.

At least one of the PROGs 10C and 12C is assumed to include program instructions that, when executed by the associated DP, enable the device to operate in accordance with the exemplary embodiments of this invention, as will be discussed below in greater detail.

That is, the exemplary embodiments of this invention may be implemented at least in part by computer software executable by the DP 10A of the UE 10 and/or by the DP 12A of the access node 12, or by hardware, or by a combination of software and hardware (and firmware).

For the purposes of describing the exemplary embodiments of this invention the UE 10 may be assumed to also include a second stage channel estimator 10E, and the access node 12 may include a second stage channel estimator 12E. These are detailed more particularly above with respect to Figures 4 and 5.

In general, the various embodiments of the UE 10 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The computer readable MEMs 10B and 12B may be of any type suitable to the local technical environment and may be implemented using any suitable data storage technology, such as semiconductor based memory devices, flash memory, magnetic memory devices and systems, optical memory devices and systems, fixed memory and removable memory. The DPs 10A and 12A may be of any type suitable to the local technical environment, and may include one or more of general purpose computers, special purpose computers, microprocessors, digital signal processors (DSPs) and processors based on a multicore processor architecture, as non-limiting examples.

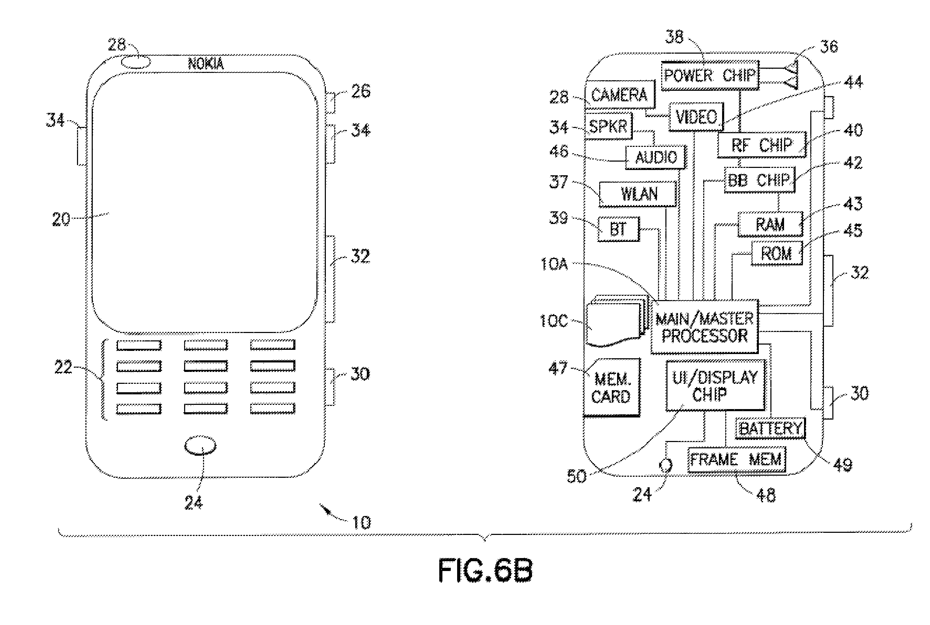

Figure 6B illustrates further detail of an exemplary UE in both plan view (left) and sectional view (right), and the invention may be embodied in one or some combination of those more function-specific components. At Figure 6B the UE 10 has a graphical display interface 20 and a user interface 22 illustrated as a keypad but understood as also encompassing touch-screen technology at the graphical display interface 20 and voice-recognition technology received at the microphone 24. A power actuator 26 controls the device being turned on and off by the user. The exemplary UE 10 may have a camera 28 which is shown as being forward facing (e.g., for video calls) but may alternatively or additionally be rearward facing (e.g., for capturing images and video for local storage). The camera 28 is controlled by a shutter actuator 30 and optionally by a zoom actuator 32 which may alternatively function as a volume adjustment for the speaker (s) 34 when the camera 28 is not in an active mode.

Within the sectional view of Figure 6B are seen multiple transmit/receive antennas 36 that are typically used for cellular communication. The antennas 36 may be multi-band for use with other radios in the UE. In the case where the invention is embodied in software or in a ship that is less than an entire UE, the antennas may be represented as simply receive antenna ports to which the physical antenna couples in the completed UE device. The operable ground plane for the antennas 36 is shown by shading as spanning the entire space enclosed by the UE housing though in some embodiments the ground plane may be limited to a smaller area, such as disposed on a printed wiring board on which the power chip 38 is formed. The power chip 38 controls power amplification on the channels being transmitted and/or across the antennas that transmit simultaneously where spatial diversity is used, and amplifies the received signals. The power chip 38 outputs the amplified received signal to the radio-frequency (RF) chip 40 which demodulates and downconverts the signal for baseband processing. The baseband (BB) chip 42 detects the signal which is then converted to a bit-stream and finally decoded. Similar processing occurs in reverse for signals generated in the apparatus 10 and transmitted from it.

Signals to and from the camera 28 pass through an image/video processor 44 which encodes and decodes the various image frames. A separate audio processor 46 may also be present controlling signals to and from the speakers 34 and the microphone 24. The graphical display interface 20 is refreshed from a frame memory 48 as controlled by a user interface chip 50 which may process signals to and from the display interface 20 and/or additionally process user inputs from the keypad 22 and elsewhere.

Certain embodiments of the UE 10 may also include one or more secondary radios such as a wireless local area network radio WLAN 37 and a Bluetooth® radio 39, which may incorporate an antenna on-chip or be coupled to an off-chip antenna. Throughout the apparatus are various memories such as random access memory RAM 43, read only memory ROM 45, and in some embodiments removable memory such as the illustrated memory card 47 on which the various programs 10C are stored. All of these components within the UE 10 are normally powered by a portable power supply such as a battery 49.

The aforesaid processors 38, 40, 42, 44, 46, 50, if embodied as separate entities in a UE 10 or eNB 12, may operate in a slave relationship to the main processor 10A, 12A, which may then be in a master relationship to them. Embodiments of this invention are most relevant to the baseband chip 42 in which the SIC processing primarily takes place in exemplary embodiments of the invention, though it is noted that other embodiments need not be disposed there but may be disposed across various chips and memories as shown or disposed within another processor that combines some of the functions described above for Figure 6B. Any or all of these various processors of Figure 6B access one or more of the various memories, which may be on-chip with the processor or separate therefrom. Similar function-specific components that are directed toward communications over a network broader than a piconet (e.g., components 36, 38, 40, 42-45 and 47) may also be disposed in exemplary embodiments of the access node 12, which may have an array of tower-mounted antennas more than just the two shown at Figure 6A.

Note that the various chips (e.g., 38, 40, 42, etc.) that were described above may be combined into a fewer number than described and, in a most compact case, may all be embodied physically within a single chip.

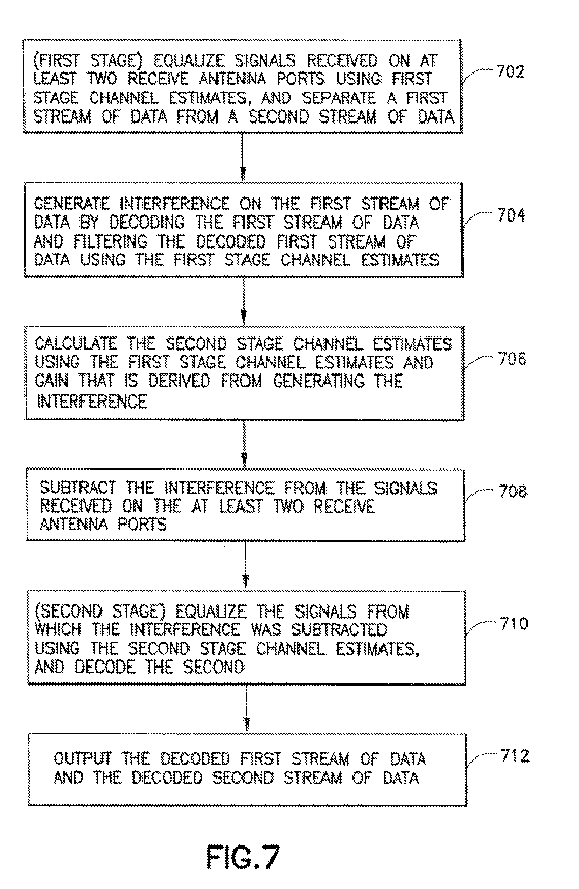

Figure 7 is a logic flow diagram that illustrates the operation of a method, and a result of execution of computer program instructions, in accordance with the exemplary embodiments of this invention. In accordance with these exemplary embodiments a method performs, at Block 702, in a first stage of a receiver, equalizing signals received on at least two receive antenna ports using first stage channel estimates and separating a first stream of data from a second stream of data. At block 704 there is generated interference on the first stream of data by decoding the first stream of data and filtering the decoded first stream of data using the first stage channel estimates. At block 706 is calculated second stage channel estimates using the first stage channel estimates and gain derived from generating the interference. And at block 708 the interference is subtracted from the signals received on the at least two receive antenna ports.

Now clearly in the second stage of the SIC receiver, at block 710 the signals from which the interference was subtracted are equalized using the second stage channel estimates and decoding the second stream of data. At block 712 the decoded first stream of data and the decoded second stream of data are output.

As is detailed above for the first embodiment, generating the interference includes separately generating data interference on the first stream of data and generating pilot interference on pilot signals associated with the first stream of data. Also in that first embodiment, subtracting the interference means separately subtracting from the signals received on the at least two receive antenna ports the data interference and the pilot interference.

Further as detailed above for the first embodiment, the pilot interference is generated using fake pilot symbols $f_1$ and $f_2$ corresponding to the respective first and second streams of data using a precoding matrix **W** from which received

pilot symbols $C_1$ and $C_2$ are computed, and the first stage channel estimates are used in calculating the second stage channel estimates by the data interference being subtracted from the signals received on the at least two receive antenna ports.

Also within the first embodiment detailed above, the second stage channel estimates are calculated from the signals received on at least two receive antenna ports from which were subtracted the separate data interference and the pilot interference.

According to the second embodiment detailed above the second stage channel estimates are modified directly from the first stage channel estimates. Also according to the second embodiment above the second stage channel estimates are calculated by multiplying the first stage channel estimates by a precoding matrix, scaling by the gain, and multiplying the scaled result by an inverse of the precoding matrix.

The various blocks shown in Figures 5-7 as well as the further details for the particular embodiments immediately above may be viewed as method steps, and/or as operations that result from operation of computer program code, and/or as a plurality of coupled logic circuit elements constructed to carry out the associated function(s).

In general, the various exemplary embodiments may be implemented in hardware or special purpose circuits, software, logic or any combination thereof For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as nonlimiting examples, hardware, software, firmware, special purpose circuits or logic, general purpose hardware or controller or other computing devices, or some combination thereof.

It should thus be appreciated that at least some aspects of the exemplary embodiments of the inventions may be practiced in various components such as integrated circuit chips and modules, and that the exemplary embodiments of this invention may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, the exemplary embodiments described above are quite readily adapted to systems such as LTE, WiMAX and WCDMA, but the SIC receiver detailed herein is readily adaptable to any system in which the transmitter mixes data streams in the transmission from each transmit antenna.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

**Claims**

1. A method, comprising:

   in a first stage of a receiver, equalizing signals received on at least two receive antenna ports using first stage channel estimates and separating a first stream of data from a second stream of data;
   generating interference on the first stream of data by decoding the first stream of data and filtering the decoded first stream of data using the first stage channel estimates;
   calculating second stage channel estimates using the first stage channel estimates and gain derived from generating the interference;

subtracting the interference from the signals received on the at least two receive antenna ports;
in a second stage of the receiver, equalizing the signals from which the interference was subtracted using the second stage channel estimates and decoding the second stream of data; and
outputting the decoded first stream of data and the decoded second stream of data.

2. The method according to claim 1, wherein generating the interference comprises separately generating data interference on the first stream of data and generating pilot interference on pilot signals associated with the first stream of data;
and wherein subtracting the interference comprises separately subtracting from the signals received on the at least two receive antenna ports the data interference and the pilot interference.

3. The method according to claim 2, wherein the pilot interference is generated using fake pilot symbols $f_1$ and $f_2$ corresponding to the respective first and second streams of data using a precoding matrix W from which received pilot symbols $C_1$ and $C_2$ are computed;
and in which the first stage channel estimates are used in calculating the second stage channel estimates by the data interference being subtracted from the signals received on the at least two receive antenna ports.

4. The method according to any one of claims 2 or 3, in which the second stage channel estimates are calculated from the signals received on at least two receive antenna ports from which were subtracted the separate data interference and the pilot interference.

5. The method according to claim 1, in which the second stage channel estimates are modified directly from the first stage channel estimates.

6. The method according to any one of claims 1 or 5, in which the second stage channel estimates are calculated by multiplying the first stage channel estimates by a precoding matrix; scaling by the gain; and thereafter multiplying by an inverse of the precoding matrix.

7. The method according to any one of claims 1-3 or 5, in which the receiver is disposed within a user equipment operating in one of a long term evolution, worldwide interoperability for microwave access, or wideband code division multiple access system.

8. The method according to any one of claims 1-3 or 5, in which the receiver is disposed within an access node of one of a long term evolution, worldwide interoperability for microwave access, or wideband code division multiple access system.

9. An apparatus comprising:

at least two receive antenna ports;
first channel estimating means for providing first stage channel estimates;
first equalizing means for equalizing signals using the first stage channel estimates;
first post-processing means for separating an output of the first equalizing means into a first stream of data from a second stream of data;
data interference regeneration means for generating interference on the first stream of data by filtering the first stream of data, after decoding, using the first stage channel estimates;
second channel estimating means for calculating second stage channel estimates using the first stage channel estimates and for deriving a gain from the generated interference;
summing means for subtracting the interference from signals output from the at least two receive antenna ports;
second equalizing means for equalizing the signals output from the summing means using the second stage channel estimates and for decoding the second stream of data; and
output means for outputting the first stream of data after decoding and for outputting the second stream of data after decoding.

10. The apparatus according to claim 9, wherein the said interference is data interference, the apparatus further comprising:

pilot interference regeneration means for generating pilot interference on pilot signals of the first stream of data; and

further summing means for subtracting the pilot interference from the signals output from the at least two receive antenna ports.

11. The apparatus according to claim 10, wherein the pilot interference is generated using fake pilot symbols $f_1$ and $f_2$ corresponding to the respective first and second streams of data using a precoding matrix W from which received pilot symbols $C_1$ and $C_2$ are computed;
and in which the first stage channel estimates are used in calculating the second stage channel estimates by the data interference being subtracted from the signals output from the at least two receive antenna ports.

12. The apparatus according to any one of claims 10 or 11, in which the second stage channel estimates are calculated from the signals received on at least two receive antenna ports from which were subtracted the separate data interference and the pilot interference.

13. The apparatus according to claim 9, in which the second stage channel estimates are modified in the second channel estimating means directly from the first stage channel estimates.

14. The apparatus according to any one of claims 9 or 13, in which the second channel estimating means is for calculating the second stage channel estimates by multiplying the first stage channel estimates by a precoding matrix; scaling by the gain; and thereafter multiplying by an inverse of the precoding matrix.

15. A computer program product embodied on a tangible medium and comprising instructions that, when executed by at least one data processor, result in operations according to any of claims 1 to 8.

**FIG. 1**
PRIOR ART

$C_1 = w_1f_1 + w_3f_2$

$C_1 = w_2f_1 + w_4f_2$

PRECODING

FIG.2

FIG.3

FIG.4

FIG.5

EP 2 276 210 A2

FIG.6A

FIG.6B

```
┌─────────────────────────────────────────────────┐
│ (FIRST STAGE) EQUALIZE SIGNALS RECEIVED ON AT    │
│ LEAST TWO RECEIVE ANTENNA PORTS USING FIRST      │── 702
│ STAGE CHANNEL ESTIMATES, AND SEPARATE A FIRST    │
│ STREAM OF DATA FROM A SECOND STREAM OF DATA      │
└─────────────────────────────────────────────────┘
                       │
                       ▼
┌─────────────────────────────────────────────────┐
│ GENERATE INTERFERENCE ON THE FIRST STREAM OF     │
│ DATA BY DECODING THE FIRST STREAM OF DATA        │── 704
│ AND FILTERING THE DECODED FIRST STREAM OF        │
│ DATA USING THE FIRST STAGE CHANNEL ESTIMATES     │
└─────────────────────────────────────────────────┘
                       │
                       ▼
┌─────────────────────────────────────────────────┐
│ CALCULATE THE SECOND STAGE CHANNEL ESTIMATES     │
│ USING THE FIRST STAGE CHANNEL ESTIMATES AND      │── 706
│ GAIN THAT IS DERIVED FROM GENERATING THE         │
│ INTERFERENCE                                     │
└─────────────────────────────────────────────────┘
                       │
                       ▼
┌─────────────────────────────────────────────────┐
│ SUBTRACT THE INTERFERENCE FROM THE SIGNALS       │
│ RECEIVED ON THE AT LEAST TWO RECEIVE             │── 708
│ ANTENNA PORTS                                    │
└─────────────────────────────────────────────────┘
                       │
                       ▼
┌─────────────────────────────────────────────────┐
│ (SECOND STAGE) EQUALIZE THE SIGNALS FROM         │
│ WHICH THE INTERFERENCE WAS SUBTRACTED            │── 710
│ USING THE SECOND STAGE CHANNEL ESTIMATES,        │
│ AND DECODE THE SECOND                            │
└─────────────────────────────────────────────────┘
                       │
                       ▼
┌─────────────────────────────────────────────────┐
│ OUTPUT THE DECODED FIRST STREAM OF DATA          │── 712
│ AND THE DECODED SECOND STREAM OF DATA            │
└─────────────────────────────────────────────────┘
```

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6917821 B2

- US 6917821 B

**Non-patent literature cited in the description**

- Optimal Precoding and MMSE Receiver Designs for MIMO WCDMA. **Shakti Prasad Shenoy ; Irfan Ghauri ; Dirk T.M.** VEHICULAR TECHNOLOGY CONFERENCE. VTC SPRING, 11 May 2008, 893-897